# EUROPÄISCHE PATENTSCHRIFT

(11) **EP 0 635 962 B1**
(45) Veröffentlichungstag und Bekanntmachung des Hinweises auf die Patenterteilung: **27.02.2002**
(21) Anmeldenummer: 94110932.4
(22) Anmeldetag: 14.07.1994
(51) Int. Cl.: H04M 1/72

(54) **Verfahren zum Ermöglichen einer akustischen Überwachung beim schnurlosen Telefon**
Method for enabling controlled listening-in with cordless telephones
Méthode permettant la surveillance acoustique au moyen de téléphones sans fil

(30) Priorität: 22.07.1993 DE 4324573
(43) Veröffentlichungstag der Anmeldung: 25.01.1995
(73) Patentinhaber: GRUNDIG Aktiengesellschaft, 90471 Nürnberg (DE)
(72) Erfinder: Schwarz, Erwin, Grundig E.M.V., D-90748 Fürth (DE)

(56) Entgegenhaltungen:
- EP-A- 0 304 998
- EP-A- 0 422 429
- DE-C- 4 138 886
- US-A- 4 731 814
- PATENT ABSTRACTS OF JAPAN vol. 017, no. 287 (E-1374), 2.Juni 1993 & JP 05 014457 A (SHARP CORP), 22.Januar 1993,

## Beschreibung

Die Erfindung betrifft ein Verfahren zum Ermöglichen einer akustischen Überwachung beim schnurlosen Telefon nach dem Oberbegriff der Patentansprüche 1, 2 oder 3.

Aus DD 294 149 A5 ist ein Apparat für die fernmeldetechnische Kommunikation, insbesondere Telefon oder Funkgerät, bekannt. Dieser kann mit einem Gerät zur akustischen Raumüberwachung baulich vereinigt und elektrisch gekoppelt werden. Die technischen Maßnahmen zur Realisierung eines synergetischen Zusammenwirkens von schnurlosem Telefon und Raumüberwachung sind jedoch nicht weiter ausgeführt.

Von Nachteil dabei ist, daß ein zusätzliches Gerät zur Raumüberwachung benötigt wird.

Aus der DE 36 08 238 A1 ist ein Telefoncomputer bekannt. Dieses Gerät ermöglicht es einem Anrufer, über ein eingebautes oder externes Mikrofon in den Raum, in dem der Telefoncomputer steht, hineinzuhören. Nach einer bestimmten Dauer wird der Mithörvorgang unterbrochen, sofern der Anrufer nicht eine bestimmte Taste betätigt. Technische Einzelheiten zur Realisierung mittels schnurlosem Telefon werden nicht angegeben.

Ein dabei auftretender Nachteil ist, daß immer nur der Raum überwacht werden kann, in dem der Telefoncomputer aufgestellt ist.

Aus der US 51 48 470 ist ein Funktelefon für einen schnellen Verbindungsaufbau bekannt. In einer Ausführungsform wird dabei automatisch durch die Unterbrechung des Ladevorgangs ein Verbindungsaufbau initialisiert. Um den Benutzer von dem erfolgten Verbindungsaufbau akustisch zu informieren, wird das Übertragungssignal mit einer erhöhten Verstärkung wiedergegeben, sobald eine Funkverbindung aufgebaut wurde. Sobald ein Sprachsignal erkannt wurde, wird das Ubertragungssignal wieder mit einer geringeren Verstärkung ausgegeben. Nach Abheben des Mobilteils aus der Ladeschale werden alle Geräusche, die aufgenommen werden, weitergeleitet bzw. wiedergegeben.

Ein Nachteil ist dabei, daß der Vorgang automatisch durch Unterbrechen des Ladevorgangs eingeleitet wird. Eine Steuerung ist dabei nicht möglich. Weiterhin werden nicht benötigte Baugruppen nicht abgeschaltet, was zu einem erhöhten Stromverbrauch führt. Ein weiterer Nachteil ist die bidirektionale Übertragung der Geräusche, wodurch eine unbemerkte Raumüberwachung nur schwer möglich ist.

Aus der DE 41 38 886 C1 der Anmelderin ist ein Verfahren bekannt, welches das kontrollierte Mithören beim schnurlosen Telefon ermöglicht. Hierbei kann ein Benutzer von seiner Mobilstation aus ein oder mehrere zusätzliche Mobilstationen, die der gleichen Basisstation zugeordnet sind, auswählen, von denen aus ein Telefongespräch mitgehört werden kann. Hierbei wird den beteiligten Mobilstationen der Übertragungskanal zugewiesen, der für die Funkverbindung benutzt wird, nachdem festgestellt wurde, daß dieser nicht belegt ist: Während des Mithörens werden die dafür nicht benötigten Baugruppen abgeschaltet, wodurch Energie eingespart und eine nicht gewünschte bidirektionale Übertragung ausgeschlossen wird. Gleichzeitig zum Mithören des Telefonats werden selbstverständlich auch Nebengeräusche mitgehört, die über die Fernsprechverbindung übertragen werden. Der Mithörvorgang wird benutzergesteuert beendet, wodurch die Mobilstationen wieder in den Bereitschaftsbetrieb gebracht werden.

Weiterhin sind akustische Überwachungsanlagen insbesondere für Kinderzimmer (elektronische Babysitter) bekannt, die die akustischen Signale vom zu überwachenden Raum über das für die Spannungsversorgung übliche Leitungsnetz zu einem Empfänger senden und dort akustisch wiedergeben.

Aus EP-A-0 422 429 ist ein schnurloser Telefonapparat mit einer in der Mobilstation und der Basisstation angeordneten Sendersuchlaufeinrichtung bekannt. Die Sendersuchlaufeinrichtung tastet zyklisch alle Funkübertragungskanäle ab und ist mit einem mit der Sendersuchlaufeinrichtung gekoppelte Speicher zur Speicherung einer Information über den Belegungszustand der Funkübertragungskanäle verbundenen. Im weiteren ist er mit einer in der Mobilstation und der Basisstation angeordneten Steuereinrichtung verbunden, wobei zum Verbindungsaufbau und zur Verbindungsüberwachung vom Sender über den freien Funkübertragungskanal zum Empfänger der Gegenstation eine dem schnurlosen Telefonapparat zugeordnete Kennung übertragen wird. Die Empfänger weisen jeweils eine Einrichtung zur Erfassung und Vergleichung der Kennung mit der empfängerseitigen Kennung auf und bei Übereinstimmung der Kennungen wird die Verbindung durchgeschaltet und die Empfangsqualität der bestehenden Funkverbindung überwacht. Zusätzlich wird im Speicher eine Information über die Belegungsdauer der Funkübertragungskanäle abgespeichert.

Von Nachteil bei einer derartigen Anlage ist, daß mit der Anschaffung einer separaten Anlage parallel zu einem bereits vorhandenen schnurlosen Telefon zusätzliche Kosten entstehen. Weiterhin bietet eine Übertragung über das Leitungsnetz zur Spannungsversorgung praktisch keine Abhörsicherheit. Ein weiterer Nachteil besteht in der geringen Übertragungsqualität solcher Anlagen, da Oberwellen im Spannungsversorgungsnetz zu Störungen führen. Der Erfindung liegt die Aufgabe zugrunde ein Verfahren für ein schnurloses Telefon derart auszugestalten, daß ohne großen zusätzlichen Aufwand eine akustische Überwachung ermöglicht wird. Dabei soll eine hohe Übertragungsqualität und Störsicherheit erreicht werden.

Diese Aufgabe wird durch die kennzeichnenden Merkmale der Ansprüche 1, 2 oder 3 gelöst.

Das erfindungsgemäße Verfahren weist den Vorteil auf, daß keine zusätzlichen Baugruppen erforderlich sind. Ein bereits vorhandenes schnurloses Telefon kann zur akustischen Überwachung verwendet werden, wobei beim Vorhandensein mehrerer Mobilstationen die Möglichkeit erhalten bleibt, mit einer nicht zur Überwachung genutzten Mobilstation eine Nachrichtenverbindung aufzubauen. Durch die automatische Abschaltung der für die Überwachung nicht benötigten Baugruppen ergibt sich der Vorteil, daß nur wenig Energie verbraucht wird. Bereits in den Mobilstationen vorhandene Steuereinrichtungen können mitbenutzt werden.

Das erfindungsgemäße Verfahren nach Anspruch 2 weist den Vorteil auf, daß die Basisstation als Funkrelaisstation verwendet wird. Befindet sich die Basisstation zwischen den beiden Mobilstationen, so kann die Reichweite erhöht werden. Weiterhin ist ein Kennungsaustausch zwischen den Mobilstationen und der Basisstation in bekannter Art und Weise möglich.

Das erfindungsgemäße Verfahren nach Anspruch 3 weist den Vorteil auf, daß eine akustische Überwachung auch über eine Amtsleitung des Nachrichtennetzes, an welches das schnurlose Telefon angeschlossen ist, erfolgen kann. Dadurch kann man praktisch von einem beliebigen Ort aus eine akustische Überwachung durchführen. Durch die Verwendung eines Codes, der nicht allgemein bekannt ist, kann ein Abhören durch eine dazu nicht berechtigte Person verhindert werden.

Das erfindungsgemäße Verfahren nach Anspruch 4 weist den Vorteil auf, daß durch die Abschaltung der Mikrofonbaugruppe der die akustischen Signale wiedergebenden Station und der Lautsprecherbaugruppe der die akustischen Signale aufnehmenden Station sichergestellt wird, daß die Übertragung akustischer Signale ausschließlich in der gewünschten Richtung erfolgt. Außerdem wird durch das Abschalten von Baugruppen Energie eingespart.

Das erfindungsgemäße Verfahren nach Anspruch 5 weist den Vorteil auf, daß die Senderbaugruppe der die akustischen Signale wiedergebenden Station im Überwachungsmodus durch die Steuereinrichtung nur eingeschaltet wird, wenn Steuerdaten übertragen werden. Akustische Signale werden nicht gesendet, wodurch Energie eingespart wird.

Das erfindungsgemäße Verfahren nach Anspruch 6 weist den Vorteil auf, daß mit mehreren Mobilteilen ein größeres Gebiet gleichzeitig überwacht werden kann. Dies ermöglicht auch, daß Mobilteile sehr nahe am zu überwachenden Objekt aufgestellt werden können, wenn mehrere Objekte zu überwachen sind. Dadurch kann die Ansprechempfindlichkeit erhöht werden.

Das erfindungsgemäße Verfahren nach Anspruch 7 weist den Vorteil auf, daß nur dann eine Funkübertragung im Überwachungsmodus erfolgt, wenn ein akustisches Signal erkannt wurde. Dadurch kann eine wesentliche Energieeinsparung erreicht werden.

Das erfindungsgemäße Verfahren nach Anspruch 8 weist den Vorteil auf, daß auch besonders leise oder kurze akustische Signale im Überwachungsmodus erkannt werden können.

Die Erfindung wird im folgenden anhand in der Zeichnung dargestellter Ausführungsformen näher beschrieben und erläutert.

Es zeigt:
- Fig. 1: den Austausch der Datentelegramme zwischen den beiden Mobilstationen und der Basisstation,
- Fig. 2: das beteiligte schnurlose Telefon, wenn die Überwachnung durch zwei Mobilstationen durchgeführt wird und
- Fig. 3: das beteiligte schnurlose Telefon aus Fig. 2, wenn zusätzlich die Basisstation zur Überwachung benutzt wird.

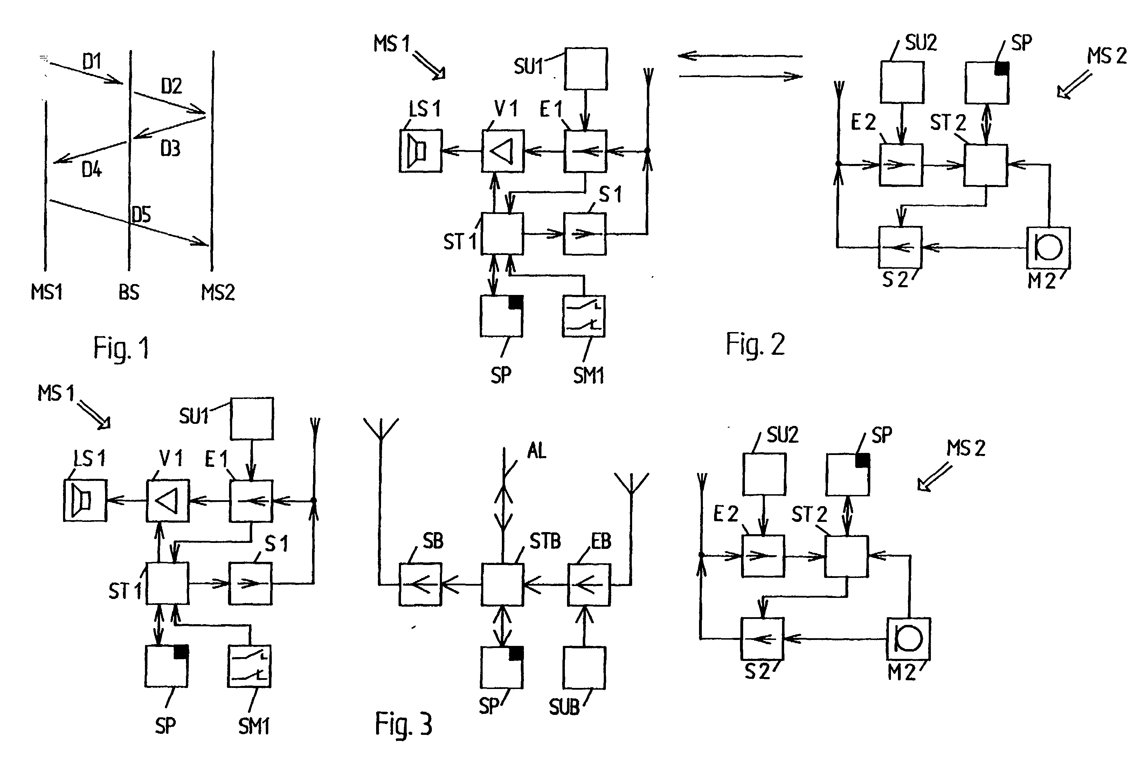

Fig. 1 zeigt den Austausch von Daten-Telegrammen D1 bis D5 zwischen den Mobilsstationen MS1, MS2 und der Basisstation BS, wenn von der Mobilstation MS1 aus ein Raum bzw. ein Gebiet akustisch überwacht werden soll, in dem sich die Mobilstation MS2 befindet.

Zum Einleiten der akustischen Überwachung betätigt der Benutzer an Mobilstation MS1 Schaltmittel SM1. Damit der Uberwachungsmodus nicht durch einen unberechtigten Benutzer eingestellt werden kann, ist gegebenenfalls zusätzlich die Eingabe eines Geheimcodes über die an jeder Mobilstation vorhandene Tastatur zur Rufnummerneingabe erforderlich. Anschließend startet die Mobilstation MS1 ihre Suchlaufeinrichtung SU1 um festzustellen, welche übertragungskanäle nicht belegt sind. Zusammen mit einem speziellen Code, der die Einleitung der akustischen Überwachung signalisiert, werden die von der Suchlaufeinrichtung SU1 als frei erkannten übertragungskanäle in einem Datentelegramm D1 zur Basisstation BS übertragen. Diese dient als Funkrelaisstation und leitet die Information als Datentelegramm D2 in einem anderen Übertragungskanal an Mobilstation MS2 weiter. Ist dies nicht möglich, weil sich z.B. die Mobilstation MS2 außerhalb der Reichweite der Basisstation BS befindet, wird der Mobilstation MS1 eine Meldung übertragen, die diese akustisch und/oder optisch ausgibt. Alternativ kann auch die Basisstation BS ihren Suchlauf SUB starten und die von ihr als frei erkannten übertragungskanäle im Datentelegramm D2 an Mobilstation MS2 übertragen.

Hat Mobilstation MS2 das Datentelegramm D2 empfangen, werden die als frei erkannten Übertragungskanäle von Mobilstation MS2 durch deren Suchlaufeinrichtung SU2 auf ihren Belegtzustand hin überprüft. Sobald ein Übertragungskanal auch von Mobilsstation MS2 als frei erkannt wird, sendet Mobilstation MS2 ein Datentelegramm D3 an die Basisstation BS, die es in einem anderen Übertragungskanal als Datentelegramm D4 an Mobilstation MS1 weiterleitet. Die Datentelegramme D3 und D4 beinhalten die Information über den für beide Mobilstationen freien Übertragungskanal. Anschließend wechseln die beiden Mobilstationen MS1 und MS2 auf diesen Übertragungskanal.

Bei einem digitalen schnurlosen Telefon ist dabei unter einem Übertragungskanal ein Zeitschlitzpaar in einem Funkkanal zu verstehen, wobei der ubertragungskanal durch die Verwendung zweier unterschiedlicher Zeitschlitze aus einem Hin- und Rückkanal besteht. Der Sender S1 von Mobilstation MS1 wird auf einen der beiden Zeitschlitze synchronisiert, ebenso wie der Empfänger E2 in Mobilstation MS2. Der Sender S2 von Mobilstation MS2 wird auf den zweiten Zeitschlitz des Ubertragungskanals synchronisiert, ebenso wie der Empfänger E1 der Mobilstation MS1.

Die Basisstation BS wird ab diesem Zeitpunkt im Überwachungsmodus nicht mehr benötigt. Es besteht die Möglichkeit über eine dritte Mobilstation, die der Basisstation BS zugeordnet ist, eine Kommunikationsverbindung über das Nachrichtennetz aufzubauen.Weiterhin ergibt sich durch die Synchronisation der Mobilstationen auf einen beliebigen Zeitschlitz die Möglichkeit , daß ein Verbindungsaufbau zwischen zwei Mobilstationen MS1 und MS2 auch unabhängig von einer Basisstation BS durchgeführt werden kann.

Die von Mobilstation MS2 erfaßten akustischen Signale werden durch deren Sender S2 über den Übertragungskanal zum Empfänger E1 der Mobilstation MS1 übertragen und akustisch ausgegeben. Hierbei soll für akustische Signale eine Simplexverbindung von Mobilstation MS1 zu Mobilstation MS2, für Daten weiterhin eine Duplexverbindung bestehen. Dadurch können im Überwachungsmodus nicht benötigte Baugruppen, wie die Mikrofonbaugruppe in Mobilstation MS1 und die Lautsprecherbaugruppe einschließlich zugehörigem Verstärker in Mobilstation MS2, abgeschaltet werden. Es besteht die Möglichkeit, zwischen den Mobilstationen MS1 und MS2 einen Kennungsaustausch durchzuführen.

Um die akustische Überwachung zu beenden und den Überwachungsmodus zu verlassen, muß der Benutzer nur Schaltmittel an Mobilstation MS1 betätigen. Daraufhin wird ein Datentelegramm D5 von Mobilstation MS1 an Mobilstation MS2 gesendet, das den Überwachungsmodus beendet, und es werden in beiden Mobilstationen die Maßnahmen beendet, die für eine akustische Überwachung getroffen wurden. Beide Mobilstationen MS1 und MS2 stehen anschließend wieder für den bekannten Telefonverkehr zur Verfügung.

Fig. 2 zeigt die für die uberwachungsfunktion benötigten Baugruppen des schnurlosen Telefons. Hierbei werden akustische Signale, die von Mobilstation MS2 erfaßt werden, zu Mobilsstation MS1 übertragen und ausgegeben. Von Mobilstation MS2 wird dabei die Mikrofonbaugruppe M2 benötigt, die das akustische Signal aufnimmt, und der Sender S2, der das akustische Signal und Datentelegramme D der Steuereinheit ST2 an Mobilstation MS1 überträgt. Um die von Mobilstation MS1 gesendeten Datentelegramme D in Mobilstation MS2 empfangen zu können, wird der Empfänger E2 benötigt, der die Information an die Steuereinheit ST 2 weiterleitet. Die Steuereinheit ST2 kann außerdem die Funktion eines Sprachschalters haben, der die Verbindung auslöst, solange kein Signal von der Mikrofonbaugruppe M2 ausgegeben wird. Dies trägt wesentlich zur Energieeinsparung bei. Sobald wieder ein Signal der Mikrofonbaugruppe M2 erkannt wird, führt die Steuereinheit ST2 im Uberwachungsmodus automatisch einen neuen Verbindungsaufbau zur Mobilstation MS1 durch. Damit auch kurze akustische Signale eine entsprechende Wirkung an Mobilstation MS1 haben, kann durch die Steuereinheit ST2 auch eine im Speicher SP gespeicherte Meldung an Mobilstation MS1 übertragen werden, um für den Benutzer eine entsprechende Signalisierung durchzuführen.

In Mobilstation MS1 wird im Überwachungsmodus der Empfänger E1 benötigt, um die übertragenen Signale zu empfangen, der Verstärker V1 und die Lautsprecherbaugruppe LS1, um die empfangenen Signale akustisch auszugeben. Die Steuereinheit ST1 stellt fest, ob eine Übertragung von Mobilstation MS2 an Mobilstation MS1 stattfindet und schaltet den Verstärker V1 ein, damit ein akustisches Signal ausgegeben werden kann. Die Steuereinheit ST1 dient weiterhin dazu, Datentelegramme D über den Sender S1 an Mobilstation MS2 zu übertragen. Auch Sender S1 wird nur bei Bedarf eingeschaltet, beispielsweise zur Übertragung eines Datentelegramms D für einen Kennungsaustausch.

Alternativ dazu besteht die Möglichkeit, nicht nur zum Verbindungsaufbau im Uberwachungsmodus die Basisstation BS zu verwenden, sondern, auch während der Überwachungsmodus bereits aktiv ist, die Basisstation BS als Funkrelaisstelle weiterhin zu benutzen. Dadurch kann die Funkreichweite maximal verdoppelt werden, wenn sich die Basisstation BS genau zwischen den beiden Mobilstationen MS1 und MS2 befindet.

Bei einer derartigen Realisierung wird nach Aktivierung des Überwachungsmodus beispielsweise an Mobilstation MS 1 und nach Auswahl beispielsweise von Mobilstation MS2 zur akustischen Raumüberwachung zunächst ein Datentelegramm vom Sender S1 der Mobilstation MS1 an die Basisstation BS gesendet. Dieses wird vom Empfänger EB der Basisstation BS empfangen, und die Steuereinheit STB der Basisstation BS erkennt an dem Datentelegramm, daß der Überwachungsmodus an Mobilstation MS1 bezüglich Mobilstation MS2 eingeleitet wurde. Die Basisstation BS sendet daraufhin ein Datentelegramm an Mobilstation MS2, das sich vom vorherigen Datentelegramm nur durch den benutzten Ubertragungskanal unterscheidet. Nachdem Mobilstation MS2 das Datentelegramm empfangen hat, deaktiviert diese alle im Überwachungsmodus nicht benötigten Baugruppen, wie Verstärker und Lautsprecher usw., und meldet in einem weiteren Datentelegramm die Überwachungsbereitschaft. Dieses Datentelegramm wird in der Basisstation BS in der Frequenz oder im Übertragungszeitschlitz umgesetzt, was einem Wechsel des Übertragungskanals entspricht, und an Mobilstation MS 1 weitergeleitet. Wird dieses Datentelegramm, das die Überwachungsbereitschaft der ausgewählten Mobilstation MS2 signalisiert, nicht innerhalb einer bestimmten Zeitdauer von Mobilstation MS1 empfangen, erscheint eine entsprechende Fehlermeldung auf der Anzeigeeinheit von Mobilstation MS 1, und der Überwachungsmodus ist automatisch beendet.

Falls von Mobilstation MS1 ein entsprechendes Datentelegramm empfangen wurde, wird die Mikrofonbaugruppe von Mobilstation MS1 abgeschaltet. Sämtliche von Mobilstation MS2 detektierten akustischen Signale werden anschließend in einem ersten Übertragungskanal an die Basisstation BS übertragen. In der Basisstation BS werden diese in einen anderen Übertragungskanal umgesetzt und an die Mobilstation MS1 weitergeleitet.

Fig. 3 zeigt die bei diesem Ausführungsbeispiel benötigten Baugruppen der beiden Mobilstationen MS1 und MS2 sowie der Basisstation BS. Zum Aufbau einer Funkverbindung zwischen Mobilstation MS1 und Basisstation BS sowie zwischen Basisstation BS und Mobilstation MS2 ist es zunächst erforderlich, daß die jeweiligen Sendersuchlaufeinrichtungen SU1, SU2 und SUB freie Ubertragungskanäle suchen. Durch die Mikrofonbaugruppe M2 der Mobilstation MS2 werden akustische Signale erfaßt. Der Sender S2 dieser Mobilstation sendet diese Signale zur Basisstation BS, wo sie von deren Empfänger EB empfangen werden. Anschließend sendet der Sender SB der Basisstation BS diese empfangenen Signale zur Mobilstation MS1, wo sie von deren Empfänger E1 empfangen und über Verstärker V1 und Lautsprecher L1 akustisch wiedergegeben werden.

Es besteht auch die Möglichkeit, eine akustische Überwachung von außerhalb der Funkreichweite des schnurlosen Telefons durchzuführen. Diese Ausgestaltung ist insbesondere für eine Gerätekombination aus schnurlosem Telefon und Anrufbeantworter mit oder ohne Gesprächsaufzeichnung sinnvoll. Baut man über eine Amtsleitung AL eines Nachrichtennetzes, an das das schnurlose Telefon angeschlossen ist, eine Verbindung zum schnurlosen Telefon auf, so muß das schnurlose Telefon in der Lage sein, automatisch den Ruf durch Betätigen des Gabelumschalters anzunehmen. Anschließend erwartet es einen im Speicher SP der Basisstation BS des schnurlosen Telefons abgespeicherten Geheimcode, der von der Steuereinheit STB der Basisstation BS überprüft wird. Die Eingabe eines Geheimcodes verhindert dabei ein unberechtigtes Abhören. Stimmt der eingegebene nicht mit dem abgespeicherten Geheimcode überein, kann entweder automatisch der Gabelumschalter betätigt und dadurch die Verbindung ausgelöst werden, oder es kann der ankommende Ruf zu einem integrierten Anrufbeantworter weitergeleitet werden. Der Geheimcode muß nach dem Herstellen der Verbindung beispielsweise mittels eines DTMF-Generators über das Nachrichtennetz zum schnurlosen Telefon übertragen werden. Stimmt der eingegebene mit dem im Speicher SP abgespeicherten Geheimcode überein, kann der Benutzer die Mobilstation angeben, die die Überwachung durchführen soll. Die Basisstation BS bringt dann die ausgewählte Mobilstation durch Übertragung eines Datentelegramms D in den Überwachungsmodus und weist der Mobilstation einen eigenen Übertragungskanal zu, der von der Basisstation BS als frei erkannt wurde.

Danach überträgt die überwachende Mobilstation die aufgetretenen akustischen Signale über die ausgewählten Übertragungskanäle an die Basisstation BS. Sobald von einer Mobilstation ein Signal zur Basisstation BS übertragen wird, wird es automatisch über das Nachrichtennetz weitergeleitet. Falls mehrere Mobilstationen zur Überwachung ausgewählt wurden, übertragen mehrere Mobilstationen ein Signal zur Basisstation BS, und es kann benutzergesteuert eine Mobilstation ausgewählt oder beispielsweise ein automatischer Wechsel durchgeführt werden. Hiefür ist es erforderlich, daß die Basisstation BS entweder mehrere Empfänger EB aufweist, oder der vorhandene Empfänger EB von der Steuereinheit STB gesteuert, den Übertragungskanal wechselt.

Die für den Wechsel relevanten übertragungskanäle können dabei im Speicher SPB abgespeichert sein, wodurch ein zeitaufwendiger Suchlauf vermieden wird. Ein Wechsel des Übertragungskanals kann beispielsweise zeitabhängig erfolgen, oder in Abhängigkeit von der über den Übertragungskanal übertragenen Signalamplitude.

Durch das Auslösen der Verbindung wird das schnurlose Telefon veranlaßt, die Überwachung zu beenden. Dies geschieht wie bereits beschrieben.

## Patentansprüche

1. Verfahren zum Ermöglichen einer akustischen Überwachung beim schnurlosen Telefon, dessen Basisstation (BS) über eine Hauptanschlußleitung (AL) mit einem Nachrichtennetz in Verbindung steht und bei dem über Übertragungskanäle eine Verbindung zu einem oder mehreren der Basisstationen (BS) zugeordneten Mobilstationen (MS1, MS2) besteht, wobei die Übertragungskanäle durch eine im jeweiligen Empfänger (E1, E2) angeordnete Suchlaufeinrichtung (SU1, SU2) auf Belegung überprüft werden, freie Übertragungskanäle in einem Speicher (SP, SPB) gespeichert und während einer Verbindung zum Austausch von Datentelegrammen (D) verwendet werden,
**dadurch gekennzeichnet,**
**daß** benutzergesteuert durch Betätigen von Schaltmitteln (SM1) einer ersten Mobilstation (MS1) der Überwachungsmodus eingeleitet und eine zweite Mobilstation (MS2) ausgewählt wird, daß automatisch ein von der Suchlaufeinrichtung (SU1) der ersten Mobilstation (MS1) und der Suchlaufeinrichtung (SU2) der zweiten Mobilstation (MS2) als frei erkannter Übertragungskanal ermittelt wird, über den die Übertragung direkt zwischen der ersten Mobilstation (MS1) und der zweiten Mobilstation (MS2) erfolgt, daß in den beteiligten Mobilstationen (MS1, MS2) im Überwachungsmodus nicht benötigte Baugruppen durch eine Steuereinrichtung (ST1, ST2) abgeschaltet werden und daß durch betätigen von Schaltmitteln (SM1) der ersten Mobilstation (MS1) oder der zweiten Mobilstation (MS2) der Überwachungsmodus beendet wird und im Überwachungsmodus abgeschaltete Baugruppen wieder durch die Steuereinrichtung (ST1, ST2) eingeschaltet werden.

2. Verfahren zum Ermöglichen einer akustischen Überwachung beim schnurlosen Telefon, dessen Basisstation (BS) über eine Hauptanschlußleitung (AL) an ein Nachrichtennetz angeschlossen ist und bei dem über Übertragungskanäle eine Verbindung zu einem oder mehreren der Basisstationen (BS) zugeordneten Mobilstationen (MS1, MS2) besteht, wobei die Übertragungskanäle durch eine im jeweiligen Empfänger (E1, E2) angeordnete Suchlaufeinrichtung (SU1, SU2) auf Belegung überprüft werden, freie Übertragungskanäle in einem Speicher (SP, SPB) gespeichert und während einer Verbindung zum Austausch von Datentelegrammen (D) verwendet werden,
**dadurch gekennzeichnet,**
**daß** durch Betätigen von Schaltmitteln (SM1) einer ersten Mobilstation (MS1) der Überwachungsmodus eingeleitet und eine zweite Mobilstation (MS2) ausgewählt wird, daß automatisch ein erster von der Suchlaufeinrichtung (SU1) der ersten Mobilstation (MS1) und der Suchlaufeinrichtung (SUB) der Basisstation (BS) sowie ein zweiter von der Suchlaufeinrichtung (SU2) der zweiten Mobilstation (MS2) und der Suchlaufeinrichtung (SUB) der Basisstation (BS) als frei erkannter Übertragungskanal ermittelt wird, wobei der Empfänger (EB) der Basisstation (BS) sich auf den zweiten Übertragungskanal und der Sender (EB) der Basisstation (BS) sich auf den ersten Übertragungskanal synchronisiert, wodurch die akustischen Signale von der zweiten Mobilstation (MS2) über die Basisstation (BS) zur ersten Mobilstation (MS1) übertragen werden, daß in den beteiligten Mobilstationen (MS1, MS2) im Übertragungsmodus nicht benötigte Baugruppen durch die jeweiligen Steuereinrichtung (ST1, ST2) abgeschaltet werden und daß durch betätigen von Schaltmitteln (SM1) der ersten Mobilstation (MS1) oder der zweiten Mobilstation (MS2) der Überwachungsmodus in der Basisstation (BS) und den beiden Mobilstationen (MS1, MS2) beendet wird und im Überwachungsmodus abgeschaltete Baugruppen wieder durch die Steuereinrichtung (ST1, ST2) eingeschaltet werden.

3. Verfahren zum Ermöglichen einer akustischen Überwachung beim schnurlosen Telefon, dessen Basisstation (BS) über eine Hauptanschlußleitung (AL) mit einem Nachrichtennetz in Verbindung steht und bei dem über Übertragungskanäle eine Verbindung zu einem oder mehreren der Basisstationen (BS) zugeordneten Mobilstationen (MS1, MS2) besteht, wobei die Übertragungskanäle durch eine im jeweiligen Empfänger (E1, E2) angeordnete Suchlaufeinrichtung (SU1, SU2) auf Belegung überprüft werden, freie Übertragungskanäle in einem Speicher (SP, SPB) gespeichert und während einer Verbindung zum Austausch von Datentelegrammen (D) verwendet werden,
**dadurch gekennzeichnet,**
**daß** die Steuereinheit (STB) der Basisstation (BS) bei einem über die Hauptanschlußleitung (AL) kommenden Ruf zunächst eine erste Zeitdauer lang überprüft, ob Signale übertragen werden, die als Code zur Einleitung des Überwachungsmodus in einem Speicher (SPB) der Basisstation (BS) abgespeichert sind, daß bei einer Übereinstimmung der Signale mit dem Code benutzergesteuert mindestens eine Mobilstation (MS2) ausgewählt wird, daß automatisch ein von der Suchlaufeinrichtung (SU2) der ausgewählten Mobilstation (MS2) und von der Suchlaufeinrichtung (SUB) der Basisstation (BS) als frei erkannter Übertragungskanal ermittelt wird, wobei der Empfänger (EB) der Basisstation (BS) und der Sender (S2) der ausgewählten Mobilstation (MS2) sich zur Übertragung auf diesen Übertragungskanal synchronisieren, daß die im Überwachungsmodus nicht benötigte Baugruppen (V2, L2) abgeschaltet werden und daß durch das Beenden des Rufes der Überwachungsmodus in der ausgewählten Mobilstation (MS2) beendet wird und im Überwachungsmodus abgeschaltete Baugruppen (V2, L2) wieder eingeschaltet werden.

4. Verfahren nach einem der Ansprüche 1 oder 2,
**dadurch gekennzeichnet,**
**daß** die Steuereinheit (ST1) der ersten Mobilstation (MS1) im Überwachungsmodus in der ersten Mobilstation (MS1) die Mikrofonbaugruppe und die Steuereinheit (ST2) der zweiten Mobilstation (MS2) in der zweiten Mobilstation (MS2) die Lautsprecherbaugruppe abschaltet.

5. Verfahren nach einem der Ansprüche 1 oder 2 oder 4,
**dadurch gekennzeichnet,**
**daß** der Sender (S2) der akustische Signale empfangenden ersten Mobilstation (MS1) im Überwachungsmodus nur Datentelegramme (D) sendet.

6. Verfahren nach einem der Ansprüche 1 bis 5,
**dadurch gekennzeichnet,**
**daß** bei der Auswahl mehrerer Mobilstationen (MS1, MS2) zur akustischen Überwachung der Empfänger (EB) zyklisch die Übertragungskanäle der ausgewählten Mobilstationen (MS1, MS2) wechselt.

7. Verfahren nach einem der Ansprüche 1 bis 6,
**dadurch gekennzeichnet,**
**daß** jede Mobilstation (MS1, MS2) einen Sprachschalter aufweist, der im Überwachungsmodus das Auslösen und den Aufbau einer Verbindung in Abhängigkeit von akustischen Signalen veranlaßt.

8. Verfahren nach einem der Ansprüche 1 bis 7,
**dadurch gekennzeichnet,**
**daß** von der zweiten Mobilstation (MS2), welche im Überwachungsmodus ein akustisches Signal erkannt hat, eine spezielle Meldung durch die Steuereinheit (ST2) aus dem Speicher (SP) ausgelesen und mit dem Sender (S2) über den ausgewählten Übertragungskanal gesendet wird.

## Claims

1. Method of enabling an acoustic monitoring in the case of the cordless telephone whose base station (BS) is connected via a main exchange line (AL) to a communications network and in the case of which a connection exists via transmission channels to one or more of the mobile stations (MS1, MS2) assigned to the base stations (BS), wherein the transmission channels are checked for seizure by a search device (SU1, SU2) disposed in the respective receiver (E1, E2), free transmission channels are stored in a memory (SP, SPB) and are used during a connection for the exchange of data telegrams (D), **characterized in that** the monitoring mode is initiated under user control by actuating switching means (SM1) of a first mobile station (MS1) and a second mobile station (MS2) is selected, **in that** a transmission channel is automatically found that is detected as free by the search device (SU1) of the first mobile station (MS1) and the search device (SU2) of the second mobile station (MS2), via which transmission channel transmission takes place directly between the first mobile station (MS1) and the second mobile station (MS2), **in that** assemblies not needed in the participating mobile stations (MS1, MS2) in the monitoring mode are disconnected by a control device (ST1, ST2), and **in that** the monitoring mode is terminated by actuating switching means (SM1) of the first mobile station (MS1) or of the second mobile station (MS2) and assemblies disconnected in the monitoring mode are switched on again by the control device (ST1, ST2).

2. Method of enabling an acoustic monitoring in the case of the cordless telephone whose base station (BS) is connected via a main exchange line (AL) to a communications network and in the case of which a connection exists via transmission channels to one or more of the mobile stations (MS1, MS2) assigned to the base stations (BS) via transmission channels, wherein the transmission channels are checked for seizure by a search device (SU1, SU2) disposed in the respective receiver (E1, E2), free transmission channels are stored in a memory (SP, SPB) and are used during a connection for the exchange of data telegrams (D), **characterized in that** the monitoring mode is initiated by actuating switching means (SM1) of a first mobile station (MS1) and a second mobile station (MS2) is selected, **in that** a first transmission channel is automatically found that is detected as free by the search device (SU1) of the first mobile station (MS1) and the search device (SUB) of the base station (BS) and also a second transmission channel that is detected as free by the search device (SU2) of the second mobile station (MS2) and the search device (SUB) of the base station (SB), wherein the receiver (EB) of the base station (BS) synchronizes to the second transmission channel and the transmitter (SB) of the base station (BS) synchronizes to the first transmission channel, as a result of which the acoustic signals of the second mobile station (MS2) are transmitted to the first mobile station (MS1) via the base station (BS), **in that** assemblies in the participating mobile stations (MS1, MS2) not needed in the monitoring mode are disconnected by the respective control device (ST1, ST2) and **in that** the monitoring mode in the base station (BS) and the two mobile stations (MS1, MS2) is terminated by actuating switching means (SM1) of the first mobile station (MS1) or of the second mobile station (MS2) and assemblies disconnected in the monitoring mode are switched on again by the control device (ST1, ST2).

3. Method of enabling an acoustic monitoring in the case of the cordless telephone whose base station (BS) is connected via a main exchange line (AL) to a communications network and in the case of which a connection exists via transmission channels to one or more of the mobile stations (MS1, MS2) assigned to the base stations (BS), wherein the transmission channels are checked for seizure by a search device (SU1, SU2) disposed in the respective receiver (E1, E2), free transmission channels are stored in memory (SP, SPB) and are used during a connection for the exchange of data telegrams (D), **characterized in that**, in the case of a call arriving via the main exchange line (AL), the control unit (STB) of the base station (BS) first checks for a first time interval whether signals are being transmitted that are stored as a code for initiating the monitoring mode in a memory (SPB) of the base station (BS), **in that**, if the signals correspond to the code, at least one mobile station (MS2) is selected under user control, **in that** a transmission channel is automatically found that is detected as free by the search device (SU2) of the selected mobile station (MS2) and by the search device (SUB) of the base station (BS), wherein the receiver (EB) of the base station (BS) and the transmitter (S2) of the selected mobile station (MS2) synchronize for the purpose of transmission to said transmission channels, **in that** the assemblies (V2, L2) not needed in the transmission mode are disconnected and **in that** the monitoring mode is terminated in the selected mobile station (MS2) by terminating the call and assemblies (V2, L2) disconnected in the monitoring mode are switched on again.

4. Method according to one of Claims 1 or 2, **characterized in that** the control unit (ST1) of the first mobile station (MS1) disconnects the microphone assembly in the first mobile station (MS1) in the monitoring mode and the control unit (ST2) of the second mobile station (MS2) disconnects the loudspeaker assembly in the second mobile station (MS2).

5. Method according to one of Claims 1 or 2 or 4, **characterized in that** the transmitter (S2) of the first mobile station (MS1) receiving acoustic signals transmits, in the monitoring mode, only data telegrams (D).

6. Method according to one of Claims 1 to 5, **characterized in that**, in the case of the selection of a plurality of mobile stations (MS1, MS2) for the acoustic monitoring, the receiver (EB) cyclically changes the transmission channels of the selected mobile stations (MS1, MS2).

7. Method according to one of Claims 1 to 6, **characterized in that** every mobile station (MS1, MS2) has a voice switch that initiates, in the monitoring mode, the clearing and the setting up of a connection as a function of acoustic signals.

8. Method according to one of Claims 1 to 7, **characterized in that** a special signal is read out of the memory (SP) by the control unit (ST2) of the second mobile station (MS2) that has detected an acoustic signal in the monitoring mode and is transmitted via the selected transmission channel by the transmitter (S2).

## Revendications

1. Procédé pour permettre une surveillance acoustique dans le cas d'un téléphone sans fil, dont le poste de base (BS) est relié à un réseau de transmission d'informations, par l'intermédiaire d'une ligne de raccordement principale (AL), et dans lequel une liaison avec un ou plusieurs postes mobiles (MS1,MS2) associés aux postes de base (BS) est établie par l'intermédiaire de canaux de transmission, l'occupation des canaux de transmission est contrôlée par un dispositif de recherche (SU1,SU2) disposé dans le récepteur respectif (E1/E2), et des canaux de transmission libres sont mémorisés dans une mémoire (SP,SPB) et sont utilisés pendant une liaison pour l'échange de télégrammes de données (D), **caractérisé en ce que**, d'une manière commandée par l'utilisateur, le mode de surveillance est déclenché par l'actionnement de moyens de commutation (SM1) d'un premier poste mobile (MS1) et un second poste mobile (MS2) est sélectionné, qu'il se produit une détermination automatique d'un canal de transmission identifié comme étant libre par le dispositif de recherche (SU1) du premier poste mobile (MS1) et par le dispositif de recherche (SU2) du second poste mobile (MS2), canal de transmission par lequel la transmission s'effectue directement entre le premier poste mobile (MS1) et le second poste mobile (MS2), que dans les postes mobiles participants (MS1,MS2), les modules non nécessaires dans le mode de surveillance sont débranchés par le dispositif de commande (ST1,ST2) et que le mode de surveillance est arrêté par actionnement de moyens de commutation (SM1) du premier poste mobile (MS1) ou du second poste mobile (MS2) et que des modules débranchés dans le mode de surveillance sont à nouveau branchés par le dispositif de commande (ST1,ST2).

2. Procédé pour permettre une surveillance acoustique dans le cas d'un téléphone sans fil, dont le poste de base (BS) est relié à un réseau de transmission d'informations, par l'intermédiaire d'une ligne de raccordement principale (AL), et dans lequel une liaison avec un ou plusieurs postes mobiles (MS1,MS2) associés aux postes de base (BS) est établie par l'intermédiaire de canaux de transmission, l'occupation des canaux de transmission est contrôlée par un dispositif de recherche (SU1,SU2) disposé dans le récepteur respectif (E1,E2), et des canaux de transmission libres sont mémorisés dans une mémoire (SP,SPB) et sont utilisés pendant une liaison pour l'échange de télégrammes de données (D), **caractérisé en ce que** le mode de surveillance est déclenché par actionnement de moyens de commutation (SM1) d'un premier poste mobile (MS1), et qu'un second poste mobile (MS2) est sélectionné par actionnement de moyens de commutation (SM1) d'un premier poste mobile (MS1), qu'il se produit une détermination automatique d'un premier canal de transmission identifié comme libre par le dispositif de recherche (SU1) du premier poste mobile (MS1) et par le dispositif de recherche (SUB) du poste de base (BS), et d'un second canal de transmission identifié comme libre par le dispositif de recherche (SU2) du second poste mobile (MS2) et par le dispositif de recherche (SUB) du poste de base (BS), le récepteur (EB) du poste de base (BS) se synchronisant sur le second canal de transmission, et l'émetteur (EB) du poste de base (BS) se synchronisant sur le premier canal de transmission, ce qui a pour effet que les signaux acoustiques du second poste mobile (MS2) sont transmis en direction du premier poste mobile (MS1) par l'intermédiaire du poste de base (BS), que des modules non nécessaires dans le mode de transmission dans les postes mobiles participants (MS1,MS2) sont débranchés par le dispositif de commande respectif (ST1,ST2) et que sous l'effet de l'actionnement de moyens de commutation (SM1) du premier poste mobile (MS1) ou du second poste mobile (MS2), le mode de surveillance dans le poste de base (BS) et dans les deux postes mobiles. (MS1,MS2) est arrêté et des modules débranchés dans le mode de surveillance sont à nouveau branchés par le dispositif de commande (ST1,ST2).

3. Procédé pour permettre une surveillance acoustique dans le cas d'un téléphone sans fil, dont le poste de base (BS) est relié à un réseau de transmission d'informations, par l'intermédiaire d'une ligne de raccordement principale (AL), et dans lequel une liaison avec un ou plusieurs postes mobiles (MS1,MS2) associés aux postes de base (BS) est établie par l'intermédiaire de canaux de transmission, l'occupation des canaux de transmission est contrôlée par un dispositif de recherche (SU1,SU2) disposé dans le récepteur respectif (E1,E2), et des canaux de transmission libres sont mémorisés dans une mémoire (SP,SPB) et sont utilisés pendant une liaison pour l'échange de télégrammes de données (D), **caractérisé en ce que** lors d'un appel arrivant par l'intermédiaire de la ligne de raccordement principal (AL), le poste de commande (STB) du poste de base (BS) vérifie tout d'abord pendant un premier intervalle de temps s'il se produit une transmission de signaux qui sont mémorisés en tant que code pour le déclenchement d'un mode de surveillance dans une mémoire (SPB) du poste de base (BS), qu'en cas de coïncidence des signaux avec le code, au moins un poste mobile (MS2) est sélectionné d'une manière commandée par l'utilisateur, qu'un canal de transmission identifié comme libre par le dispositif de recherche (SU2) du poste mobile sélectionné (MS2) et par le dispositif de recherche (SUB) du poste de base (VS) est déterminé de façon automatique, le récepteur (EB) du poste de base (BS) et l'émetteur (S2) du poste mobile sélectionné (MS2) se synchronisant pour la transmission dans ce canal de transmission, que les modules (V2,L2) non nécessaires dans le mode de surveillance sont débranchés et que le mode de surveillance dans le poste mobile sélectionné (MS2) est arrêté lors de la fin de l'appel et que des modules (V2,L2) débranchés dans le mode de surveillance sont à nouveau branchés.

4. Procédé selon l'une des revendications 1 ou 2, **caractérisé en ce que** dans le mode de surveillance, l'unité de commande (ST1) du premier poste mobile (MS1) débranche le module de microphone dans le premier poste mobile (SI) et l'unité de commande (ST2) du second poste mobile (MS2) débranche le module de haut-parleur dans le second poste mobile (MS2).

5. Procédé selon l'une des revendications 1, 2 et 4, **caractérisé en ce que** dans le mode de surveillance l'émetteur (S2) émet uniquement des télégrammes de données (D) en direction du premier poste mobile (MS1) qui reçoit des signaux acoustiques.

6. Procédé selon l'une des revendications 1 à 5, **caractérisé en ce que** lors de la sélection de plusieurs postes mobiles (MS1,MS2) pour la surveillance acoustique des récepteurs (EB), les canaux de transmission des postes mobiles sélectionnés (MS1,MS2) sont changés cycliquement.

7. Procédé selon l'une des revendications 1 à 6, **caractérisé en ce que** chaque poste mobile (MS1,MS2) possède un commutateur de langage, qui, dans le mode de surveillance, provoque le déclenchement et l'établissement d'une liaison en fonction de signaux acoustiques.

8. Procédé selon l'une des revendications 1 à 7, **caractérisé en ce qu'**une signalisation spéciale est lue au moyen de l'unité de commande (ST2) à partir de la mémoire (SP), par le second poste mobile (MS2) qui a identifié un signal acoustique dans le mode de surveillance et est émis par l'émetteur (S2) au moyen du canal de transmission sélectionné.
